# EUROPEAN PATENT APPLICATION

(11) **EP 4 701 128 A1**
(43) Date of publication of application: **25.02.2026**
(21) Application number: 24806049.3
(22) Date of filing: 08.01.2024
(51) Int. Cl.: H04L 9/08

(54) **DATA PROCESSING METHOD AND SYSTEM, AND COMPUTING DEVICE**

(30) Priority: 16.05.2023 CN 202310552730; 23.08.2023 CN 202311068411
(71) Applicant: Huawei Cloud Computing Technologies Co., Ltd., Guiyang, Guizhou 550025 (CN)
(72) Inventor: HAN, Weili, Shanghai 200433 (CN); CHEN, Shuyu, Shanghai 200433 (CN); LI, Bingshuai, Guiyang, Guizhou 550025 (CN); SHAO, Yunfeng, Guiyang, Guizhou 550025 (CN); YE, Fei, Guiyang, Guizhou 550025 (CN)
(74) Representative: Goddar, Heinz J.
(86) International application number: PCT/CN2024/071000
(87) International publication number: WO 2024/234685

(57) **Abstract**

A data processing method and system, and a computing device are provided. The method includes: A first computing participant and a second computing participant separately obtain first ciphertext data. The second computing participant obtains, from the first computing participant, a share of a first feature value corresponding to a first ID. The first computing participant obtains second data, where if the first ID is an intersection ID, the second data is a share of a second feature value that is in the second computing participant and that corresponds to the first ID, or if the first ID is not an intersection ID, the second data is a random number. If the first ciphertext data indicates that the first ID is an intersection ID, the first computing participant uses the second data and a share of the first feature value that is held by the first computing participant as training data of a neural network, and the second computing participant uses a share of the first feature value and a share of the second feature value that are held by the second computing participant as training data of the neural network. In the method, security of multi-party computing can be improved.

## Description

This application claims priorities to Chinese Patent Application No. 202310552730.1, filed with the China National Intellectual Property Administration on May 16, 2023 and entitled "METHOD AND APPARATUS FOR MULTI-PARTY VERTICAL FEDERATED LEARNING WITH CONCEALED ID", and to Chinese Patent Application No. 202311068411.X, filed with the China National Intellectual Property Administration on August 23, 2023 and entitled "DATA PROCESSING METHOD AND SYSTEM, AND COMPUTING DEVICE", both of which are incorporated herein by reference in their entireties.

### TECHNICAL FIELD

This application relates to the field of secure computing, and more specifically, to a data processing method and system, and a computing device.

### BACKGROUND

Private set intersection (private set intersection, PSI) is a secure multi-party computing protocol in which an intersection part of data sets of a plurality of participants can be calculated without exposing any data set information beyond an intersection. The protocol is usually used for federated recommendation, advertisement targeting, data alignment before vertical secure multi-party learning, and the like. For example, before the vertical secure multi-party learning, the PSI technology may be used to calculate an ID value commonly held by all participants, without exposing an intersection element of a plurality of participants.

Before the vertical secure multi-party learning, an intersection part of data sets of a plurality of computing participants is calculated by using the private set intersection (PSI) technology without exposing an intersection element of the plurality of computing participants, and an AI model is trained based on data (a feature value) corresponding to the intersection part of the data sets of the plurality of participants. In a related technical solution, in a process of calculating, based on the PSI technology, an intersection of IDs in data held by a plurality of computing participants, ID plaintext in the intersection is exposed. In this case, all computing parties know specific IDs in the intersection, leading to exposure of ID privacy of a customer and poor security.

Therefore, how to improve security of multi-party computing and protect data privacy of a plurality of computing parties becomes a technical problem that urgently needs to be resolved.

### SUMMARY

This application provides a data processing method and system, and a computing device. In the method, security of multi-party computing can be improved, to protect data privacy of a plurality of computing parties.

According to a first aspect, a data processing method is provided. The method includes: A first computing participant and a second computing participant separately obtain first ciphertext data, where the first ciphertext data indicates whether a first ID of the first computing participant is an intersection ID, and the intersection ID indicates that the first ID is the same as any one of at least one ID of the second computing participant. The second computing participant obtains, from the first computing participant, a share of a first feature value corresponding to the first ID, where the share of the first feature value is obtained by the first computing participant by sharing the first feature value between the first computing participant and the second computing participant in a secret sharing mode, and the first feature value is restorable based on a share of the first feature value that is obtained by each of the first computing participant and the second computing participant. The first computing participant obtains second data, where if the first ID is an intersection ID, the second data is a share of a second feature value that is in the second computing participant and that corresponds to the first ID, or if the first ID is not an intersection ID, the second data is a random number; the share of the second feature value is obtained by the second computing participant by sharing the second feature value between the first computing participant and the second computing participant in a secret sharing mode; and the second feature value is restorable based on a share of the second feature value that is obtained by each of the first computing participant and the second computing participant. If the first ciphertext data indicates that the first ID is an intersection ID, the first computing participant uses the second data and a share of the first feature value that is held by the first computing participant as training data of a neural network. If the first ciphertext data indicates that the first ID is an intersection ID, the second computing participant uses a share of the first feature value and a share of the second feature value that are held by the second computing participant as training data of the neural network.

In the foregoing technical solution, subsequent AI model training may be performed based on data (a feature value) corresponding to an ID in an intersection, without exposing ID privacy of a customer. In this way, the ID privacy of the customer is protected, security is high, and a function requirement and a privacy requirement that are needed in a data preprocessing stage of vertical secure multi-party learning are met.

With reference to the first aspect, in some implementations of the first aspect, the method further includes: The first computing participant and the second computing participant separately perform restoration on the first ciphertext data to obtain first data; and determine, based on the first data, whether the first ID is the intersection ID.

With reference to the first aspect, in some implementations of the first aspect, the method further includes: If the first computing participant indicates, based on the first ciphertext data obtained by the first computing participant, that the first ID is not an intersection ID, the first computing participant deletes the second data and the share of the first feature value that is held by the first computing participant. If the second computing participant indicates, based on the first ciphertext data obtained by the second computing participant, that the first ID is not an intersection ID, the second computing participant deletes the share of the first feature value and the share of the second feature value that are held by the second computing participant.

In the foregoing technical solution, if the first ID is not an intersection ID, the second data corresponding to the first ID is a random number, and in this case, the second data may be deleted. In this way, only a feature value corresponding to an intersection ID can participate in training of a neural network model, so that extra overheads are avoided, and efficiency of model training is improved.

With reference to the first aspect, in some implementations of the first aspect, the method further includes: The first computing participant and the second computing participant determine, based on a plurality of pieces of ciphertext data corresponding to a plurality of hash buckets, whether a quantity of intersection IDs is greater than a preset threshold, where the plurality of pieces of ciphertext data include the first ciphertext data. When the quantity of intersection IDs is greater than the preset threshold, the second computing participant obtains, from the first computing participant, the share of the first feature value corresponding to the first ID. When the quantity of intersection IDs is greater than the preset threshold, the first computing participant obtains the second data.

The foregoing technical solution provides threshold-based determining. If an intersection includes a quite small quantity of elements, a subsequent operation is terminated. This avoids a case that a trained model has unsatisfactory effect due to insufficient data, causing a waste of training costs.

With reference to the first aspect, in some implementations of the first aspect, the method further includes: The first computing participant and the second computing participant separately randomly disorder a plurality of pieces of ciphertext data obtained by each of the first computing participant and the second computing participant.

With reference to the first aspect, in some implementations of the first aspect, the first computing participant and the second computing participant separately obtain the first ciphertext data through an oblivious programmable pseudorandom function OPPRF or key exchange DH.

With reference to the first aspect, in some implementations of the first aspect, the first computing participant obtains the second data through an oblivious programmable pseudorandom function OPPRF.

With reference to the first aspect, in some implementations of the first aspect, the first ID of the first computing participant is an ID of the first computing participant in a first hash bucket, the at least one ID of the second computing participant is at least one ID of the second computing participant in the first hash bucket, the first ciphertext data is ciphertext data corresponding to the first hash bucket, and the second data is second data corresponding to the first hash bucket.

According to a second aspect, a data processing system is provided. The system includes a first computing participant and a second computing participant. The first computing participant and the second computing participant are separately configured to obtain first ciphertext data, where the first ciphertext data indicates whether a first ID of the first computing participant is an intersection ID, and the intersection ID indicates that the first ID is the same as any one of at least one ID of the second computing participant. The second computing participant is further configured to obtain, from the first computing participant, a share of a first feature value corresponding to the first ID, where the share of the first feature value is obtained by the first computing participant by sharing the first feature value between the first computing participant and the second computing participant in a secret sharing mode, and the first feature value is restorable based on a share of the first feature value that is obtained by each of the first computing participant and the second computing participant. The first computing participant is further configured to obtain second data, where if the first ID is an intersection ID, the second data is a share of a second feature value that is in the second computing participant and that corresponds to the first ID, or if the first ID is not an intersection ID, the second data is a random number; the share of the second feature value is obtained by the second computing participant by sharing the second feature value between the first computing participant and the second computing participant in a secret sharing mode; and the second feature value is restorable based on a share of the second feature value that is obtained by each of the first computing participant and the second computing participant. If the first ciphertext data indicates that the first ID is an intersection ID, the first computing participant is further configured to use the second data and a share of the first feature value that is held by the first computing participant as training data of a neural network. If the first ciphertext data indicates that the first ID is an intersection ID, the second computing participant is further configured to use a share of the first feature value and a share of the second feature value that are held by the second computing participant as training data of the neural network.

With reference to the second aspect, in some implementations of the second aspect, the first computing participant and the second computing participant are further separately configured to perform restoration on the first ciphertext data to obtain first data; and the first computing participant and the second computing participant are further separately configured to determine, based on the first data, whether the first ID is the intersection ID.

With reference to the second aspect, in some implementations of the second aspect, if the first computing participant indicates, based on the first ciphertext data obtained by the first computing participant, that the first ID is not an intersection ID, the first computing participant is further configured to delete the second data and the share of the first feature value that is held by the first computing participant; and if the second computing participant indicates, based on the first ciphertext data obtained by the second computing participant, that the first ID is not an intersection ID, the second computing participant is further configured to delete the share of the first feature value and the share of the second feature value that are held by the second computing participant.

With reference to the second aspect, in some implementations of the second aspect, the first computing participant and the second computing participant are further configured to determine, based on a plurality of pieces of ciphertext data corresponding to a plurality of hash buckets, whether a quantity of intersection IDs is greater than a preset threshold, where the plurality of pieces of ciphertext data include the first ciphertext data. The second computing participant is specifically configured to: when the quantity of intersection IDs is greater than the preset threshold, obtain, from the first computing participant, the share of the first feature value corresponding to the first ID. The first computing participant is specifically configured to: when the quantity of intersection IDs is greater than the preset threshold, obtain the second data.

With reference to the second aspect, in some implementations of the second aspect, the first computing participant and the second computing participant are further configured to separately randomly disorder a plurality of pieces of ciphertext data obtained by each of the first computing participant and the second computing participant.

With reference to the second aspect, in some implementations of the second aspect, the first computing participant and the second computing participant are specifically configured to separately obtain the first ciphertext data through an oblivious programmable pseudorandom function OPPRF or key exchange DH.

With reference to the second aspect, in some implementations of the second aspect, the first computing participant is specifically configured to obtain the second data through an oblivious programmable pseudorandom function OPPRF.

With reference to the second aspect, in some implementations of the second aspect, the first ID of the first computing participant is an ID of the first computing participant in a first hash bucket, the at least one ID of the second computing participant is at least one ID of the second computing participant in the first hash bucket, the first ciphertext data is ciphertext data corresponding to the first hash bucket, and the second data is second data corresponding to the first hash bucket.

According to a third aspect, a computing device cluster is provided, and includes at least one computing device. Each computing device includes a processor and a memory. A processor of the at least one computing device is configured to execute instructions stored in a memory of the at least one computing device, to enable the computing device cluster to perform the method according to any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a fourth aspect, a chip is provided. The chip obtains instructions and executes the instructions to implement the method according to any one of the first aspect or the implementations of the first aspect.

Optionally, in an implementation, the chip includes a processor and a data interface. The processor reads, through the data interface, instructions stored in a memory, to perform the method according to any one of the first aspect or the implementations of the first aspect.

Optionally, in an implementation, the chip may further include a memory. The memory stores instructions. The processor is configured to execute the instructions stored in the memory. When the instructions are executed, the processor is configured to perform the method according to any one of the first aspect or the implementations of the first aspect.

According to a fifth aspect, a computer program product including instructions is provided. When the instructions are run by a computing device cluster, the computing device cluster is enabled to perform the method according to any one of the first aspect or the implementations of the first aspect.

According to a sixth aspect, a computer-readable storage medium is provided, and includes computer program instructions. When the computer program instructions are executed by a computing device cluster, the computing device cluster performs the method according to any one of the first aspect or the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard disk drive).

Optionally, in an implementation, the storage medium may be specifically a non-volatile storage medium.

### BRIEF DESCRIPTION OF DRAWINGS

FIG. 1 is a diagram of calculating vertically distributed data held by a computing participant according to an embodiment of this application;
FIG. 2 is a schematic flowchart of a data processing method according to an embodiment of this application;
FIG. 3 is a diagram of a result of performing, by a first computing participant and a second computing participant, hashing on an ID set in data held by the first computing participant and an ID set in data held by the second computing participant respectively according to an embodiment of this application;
FIG. 4 is a block diagram of obtaining a secret sharing value <y> of y by a first computing participant and a second computing participant through an OPPRF according to an embodiment of this application;
FIG. 5 is a block diagram of obtaining <fs> by a first computing participant and a second computing participant through an OPPRF according to an embodiment of this application;
FIG. 6 is a diagram of data selection according to an embodiment of this application;
FIG. 7 is another diagram of data selection according to an embodiment of this application;
FIG. 8 is a block diagram of a data processing system 800 according to an embodiment of this application;
FIG. 9 is a diagram of an architecture of a computing device 1500 according to an embodiment of this application;
FIG. 10 is a diagram of an architecture of a computing device cluster according to an embodiment of this application;
FIG. 11 is a diagram of a connection between computing devices 1500A and 1500B through a network according to an embodiment of this application; and
FIG. 12 is a block diagram of a cloud scenario to which embodiments of this application are applicable.

### DESCRIPTION OF EMBODIMENTS

The following describes technical solutions of this application with reference to the accompanying drawings.

In this application, all aspects, embodiments, or features are presented with reference to a system including a plurality of devices, components, modules, or the like. It should be appreciated and understood that each system may include another device, component, module, or the like, and/or may not include all of devices, components, modules, or the like that are discussed with reference to the accompanying drawings. In addition, a combination of these solutions may alternatively be used.

In addition, in embodiments of this application, the term "in an example", "for example", or the like is used to give an example, an illustration, or a description. Any embodiment or design scheme described as an "example" in this application should not be construed as being more preferred or advantageous than another embodiment or design scheme. To be precise, the term example is intended to present a concept in a specific manner.

In embodiments of this application, "relevant (corresponding, relevant)" and "corresponding (corresponding)" may be sometimes used interchangeably. It should be noted that meanings expressed by the terms are consistent when a difference between the terms is not emphasized.

A service scenario described in embodiments of this application is intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with evolution of a network architecture and emergence of a new service scenario.

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, or c may indicate a, b, c, a and b, a and c, b and c, or a, b, and c, where a, b, and c may be in a singular form or a plural form.

For ease of description, the following first describes in detail related concepts in embodiments of this application.

### 1. Neural network

The neural network is a computer system that simulates a function of a biological neural network, and performs various tasks by learning and training data. The neural network is a computing model including a plurality of nodes. Each node simulates behavior of a biological neuron, and can receive and process an input signal, and generate an output signal by learning and adjusting a weight.

The neural network usually includes a plurality of layers of nodes. An input layer receives external data input. An output layer generates a final output result. An intermediate hidden layer processes and converts the input. In the neural network, connections between nodes have different weights. The weights may be adjusted through training and learning to improve accuracy and performance of the network. The neural network is widely used in various fields, including image recognition, speech recognition, natural language processing, autonomous driving, medical diagnosis, financial prediction, and the like. Common neural network architectures include a feedforward neural network, a convolutional neural network, a recurrent neural network, a deep neural network, and the like.

### 2. Secure multi-party learning (secure multi-party learning, SMPL)

The secure multi-party learning is a distributed machine learning paradigm in which a plurality of parties use their respective data to collaboratively train an AI model without aggregating data of the plurality of parties (different organizations or users). In a conventional machine learning paradigm, a large amount of data needs to be aggregated for model training, and data used for training may come from a plurality of different organizations or users. If data of a plurality of different organizations or users is aggregated, a risk of data leakage is quite likely to occur. For an organization, an information asset may be exposed. For an individual user, personal privacy may be disclosed.

### 3. Vertical secure multi-party learning (vertical secure multi-party learning, VSMPL)

In the vertical secure multi-party learning, when data of a plurality of participants is vertically distributed, to protect data privacy and leverage data value, the plurality of participants combine their respective data by using a secure multi-party computing technology, to train an AI model. In vertical multi-party learning, participants may belong to different organizations, such as a hospital, a bank, or a government agency. These organizations usually hold an ID value of a user and a plurality of feature (feature) values corresponding to the ID value, and different participants hold different features. All of the data is sensitive private data of the user. Therefore, if vertical data of different organizations is aggregated for AI model training, data privacy leakage may occur. To resolve the privacy problem of the vertical multi-party learning, the vertical secure multi-party learning technology emerges correspondingly. In the vertical secure multi-party learning, data of a plurality of participants is aligned by using a private set intersection technology, and then a secure multi-party computing technology, for example, secret sharing or a garbled circuit, is used to jointly train an AI model.

### 4. Oblivious programmable pseudorandom function (oblivious programmable pseudorandom function, OPPRF)

The oblivious programmable pseudorandom function is a cryptographic protocol that implements the following function: There are two participants. It is assumed that one participant is Alice and the other participant is Bob. Alice inputs x to the OPPRF, and Bob inputs a plurality of pairs of (xi, yi) to the OPPRF. After the OPPRF is executed, Alice obtains y. If x of Alice is equal to specific xi of Bob, a value of y is yi; otherwise, y is a random number r. During an entire process of the OPPRF, neither Alice nor Bob can obtain additional information. To be specific, Bob does not know x input by Alice or the value of y that is obtained by Alice. Alice obtains only a string y, and cannot learn of, based on y, whether Alice has obtained the random number r or yi. Therefore, Alice does not know whether x of Alice is equal to specific xi of Bob. Usually, Alice is referred to as a receiver party, and Bob is referred to as a sender party.

### 5. Cuckoo hashing (cuckoo hashing)

The cuckoo hashing is an implementation of a hash table, and can resolve a hash collision. In the cuckoo hashing, each element has two hash functions, and may be assigned to a position in two hash tables. If a position in a first hash table is already occupied, the element is placed in a corresponding position in the other hash table. If the corresponding position in the other hash table is also occupied, the element is removed from an original position and placed in a new position. This process may be repeated for a plurality of times until all elements can be successfully placed in a hash table. Therefore, the cuckoo hashing is used for a set. Each bucket includes only an element in one set. Possibly, no position may be found for an element. In this case, the element is placed in a stash. Average time complexity of the cuckoo hashing is at a constant level, and the cuckoo hashing is a very efficient implementation of a hash table.

### 6. Private set intersection (private set intersection, PSI)

The private set intersection is a secure multi-party computing protocol in which an intersection part of data sets of a plurality of participants can be calculated without exposing any data set information beyond an intersection. The protocol is usually used for federated recommendation, advertisement targeting, data alignment before vertical secure multi-party learning, and the like. For example, before the vertical secure multi-party learning, the PSI technology may be used to calculate an ID value jointly held by all participants, without exposing an intersection element of a plurality of participants.

The PSI has been developed for nearly 20 years. A technology for implementing the PSI includes but is not limited to key exchange (diffie-hellman, DH), oblivious transfer (oblivious transfer, OT), an oblivious pseudorandom function (oblivious pseudorandom function, OPRF), an oblivious programmable pseudorandom function (OPPRF), homomorphic encryption (homomorphic encryption, HE), and the like. In an initial PSI solution, an intersection result of two participants may be obtained without exposing information beyond an intersection. Subsequent PSI solutions mainly focus on improvement in terms of scenarios, functions, privacy, efficiency, and other aspects. In terms of scenarios, there is a PSI solution designed for unbalanced data sets. In terms of functions, a multi-party PSI solution that can support more than two parties and a circuit-PSI solution that supports computing by using an associated value (value) corresponding to a key element in an intersection emerge. In terms of privacy, a PSI solution in which no intersection result is exposed emerges. In terms of efficiency, a method for reducing an amount of computing and an amount of communication through hashing is proposed.

### 7. Secret sharing (secret sharing)

The secret sharing, also referred to as secret splitting, is a cryptographic concept, and is used to split a secret value into several parts for sharing among a plurality of entities. Each entity obtains a part of the secret, referred to as a share or a slice. According to a manner of splitting, the original secret value can be restored after a sufficient quantity of shares are collected.

It should be understood that different secret sharing technologies are formed according to different manners of splitting, and common secret sharing technologies include additive secret sharing (additive secret sharing, ASS), Boolean secret sharing (Boolean secret sharing, BSS), and the like.

### 8. Additive secret sharing (additive secret sharing, ASS)

The additive secret sharing is an example of secret sharing, and is used to split a secret value into a plurality of shares for sharing among a plurality of participants. In the additive secret sharing, an original secret is represented as an integer, and may be split into a plurality of parts for sharing. An original secret value can be restored only when all shares are recombined. This method may be used to implement secure multi-party computing, for example, data analysis with personal privacy protected, or secure computing in distributed computing.

A splitting method of the additive secret sharing is splitting by using an addition over a field. For example, there are three participants. An original secret value held by one participant is 10, and is split into three parts on a ring with a size of 16. Two random numbers are generated: 13 and 7. Finally obtained sharing values are 13, 7, and 6 (=(10-13-6)mod16). The participant holding the secret value 10 sends two of the three shares to the other two participants. The other two participants each hold only one share, and cannot restore the original sharing value. The original secret value 10 (=(13+7+6)mod16) can be restored only by adding up the three sharing values.

### 9. Boolean secret sharing (Boolean secret sharing, BSS)

In the Boolean secret sharing, a plurality of random numbers of a secret value are generated through exclusive OR. A value obtained through exclusive OR between the random numbers is an original secret value. For example, there are three participants. An original secret value held by one participant is 0b010, and is split into three parts on a ring with a size of 8. Two random numbers are generated: 0b110 and 0b011. Finally obtained sharing values are 0b110, 0b011, and 0b111 (=0b010^0b110^0b011). The participant holding the secret value 0b010 sends two of the three shares to the other two participants. The other two participants each hold only one share, and cannot restore the original sharing value. The original secret value 0b010 (=0b111^0b110^0b011) can be restored only through exclusive OR between the three sharing values.

Before vertical secure multi-party learning, an intersection part of data sets of a plurality of computing participants is calculated by using a private set intersection (PSI) technology without exposing an intersection element of the plurality of computing participants, and an AI model is trained based on data (a feature value) corresponding to the intersection part of the data sets of the plurality of participants. In a related technical solution, in a process of calculating, based on the PSI technology, an intersection of IDs in data held by a plurality of computing participants, ID plaintext in the intersection is exposed. In this case, all computing parties know specific IDs in the intersection, leading to exposure of ID privacy of a customer and poor security.

In view of this, embodiments of this application provide a data processing method, to perform subsequent AI model training based on data (a feature value) corresponding to an ID in an intersection, without exposing ID privacy of a customer, so that the ID privacy of the customer is protected, and security is high.

It should be understood that the method provided in embodiments of this application is applied to a scenario in which a plurality of organizations jointly train a secure multi-party learning model, and complete a preprocessing process of AI model training when data is vertically distributed. Specifically, the scenario may include but is not limited to a cross-company or cross-industry federated data modeling scenario, and no requirement is imposed on a specific data distribution manner or a quantity of participants.

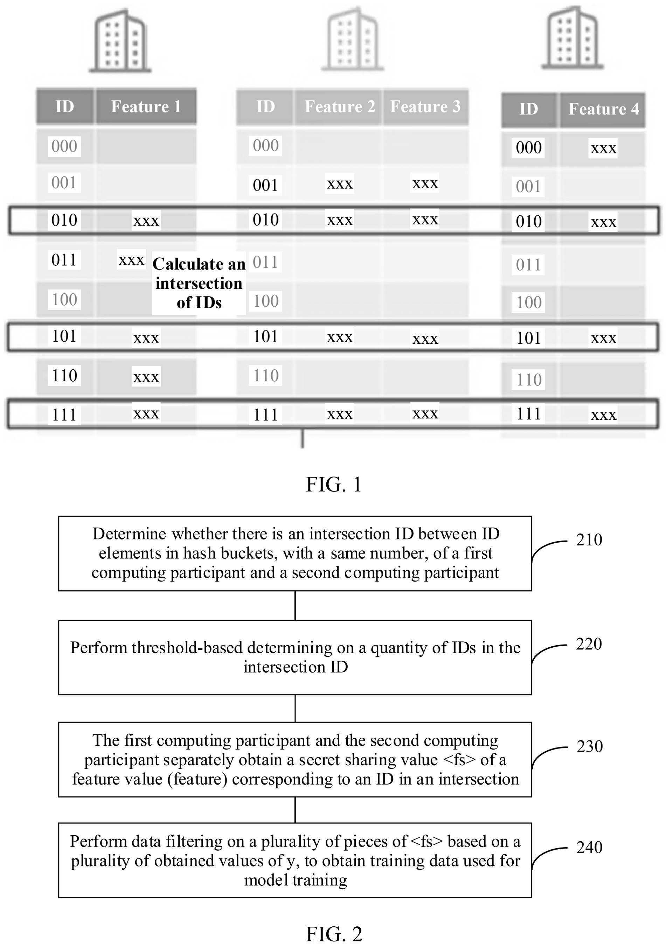

For example, a federated modeling scenario of a financial industry and an operator is used below as an example for description. For example, a plurality of financial industry users (for example, banks or securities companies) and an operator (for example, China Mobile, China Telecom, or China Unicom) use their hold user data to perform federated modeling to improve accuracy of a financial industry model (for example, a credit score model or a credit card user default model). As shown in FIG. 1, data held by these different organizations is vertically distributed. Each organization has an ID value and a feature value of a user. ID values of different organizations are not completely the same, and features of different organizations are different. These different organizations want to use feature data (feature values) of a common user to train an evaluation model for predicting a credit level of the user.

FIG. 2 is a schematic flowchart of a data processing method according to an embodiment of this application. The method is applied to a data preprocessing stage before AI model training. The method may include steps 210 to 240. The following separately describes steps 210 to 240 in detail.

Step 210: Determine whether there is an intersection ID between ID elements in hash buckets, with a same number, of a first computing participant and a second computing participant.

In this embodiment of this application, the first computing participant and the second computing participant respectively map IDs in user data respectively held by the first computing participant and the second computing participant to the hash buckets.

A quantity of computing participants is not specifically limited in this application, provided that there is more than one computing participant. In FIG. 2, two computing participants (the first computing participant and the second computing participant) are used as an example for description.

In this embodiment of this application, user data held by each computing participant may include a plurality of pairs of (x, Feature), where x is an ID, and Feature is a feature value corresponding to the ID. The feature value may be one feature value corresponding to the ID, or may be a plurality of feature values corresponding to the ID. This is not specifically limited in this embodiment of this application.

For example, an ID in user data of a bank is a mobile phone number of an account, and a feature value is deposit and withdrawal information corresponding to the ID; an ID in user data of a securities company is a mobile phone number of an account, and a feature value is securities transaction information corresponding to the ID; and an ID in user data of an operator is a mobile phone number of an account, and a feature value is a call record corresponding to the ID.

In this embodiment of this application, it is assumed that the first computing participant maps an ID in user data of the first computing participant to a hash bucket by using a cuckoo hash algorithm, and the second computing participant maps an ID in user data of the second computing participant to a hash bucket by using a common hash algorithm.

It should be noted that the first computing participant that uses the cuckoo hash algorithm may also be referred to as a leader participant. To be specific, the leader participant maps an ID in user data of the leader participant to a hash bucket by using the cuckoo hash algorithm, and another non-leader participant maps an ID in user data of the non-leader participant to a hash bucket by using a common hash algorithm.

It should be understood that the leader participant is randomly selected from at least two computing participants. For ease of description, FIG. 2 is described by using an example in which the first computing participant is a leader participant.

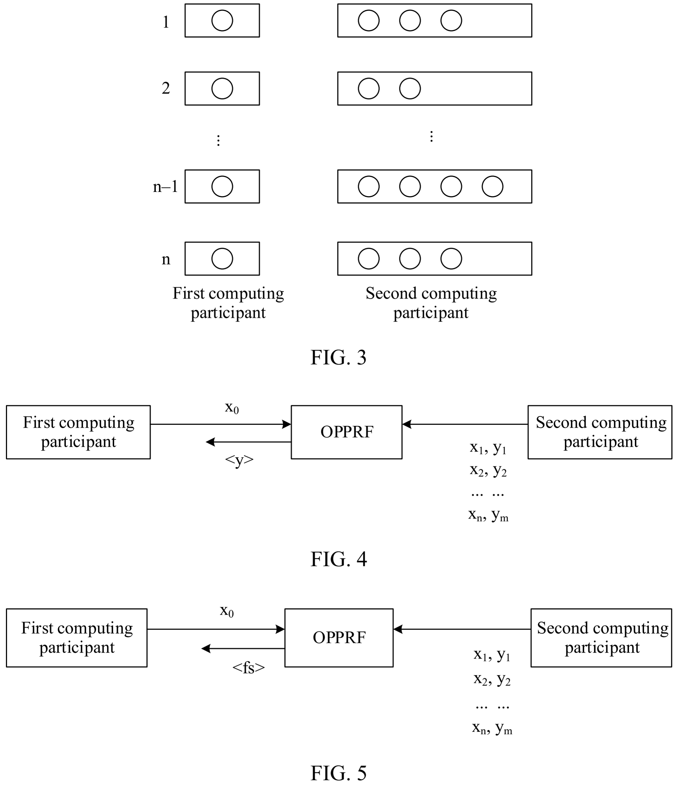

For example, as shown in FIG. 3, for the first computing participant, because the first computing participant performs cuckoo hashing on an ID set of the first computing participant, each bucket includes only one ID element. For the second computing participant, because the second computing participant performs common hashing on an ID set of the second computing participant, each bucket includes a plurality of ID elements. Because the first computing participant and the second computing participant use a same hash function, if the user data of the two computing participants includes same ID elements, the same ID elements are hashed into hash buckets with a same number.

It should be understood that a quantity of hash buckets is not specifically limited in this embodiment of this application. In FIG. 3, an example in which a data size of an ID set of each computing participant is n and there are n hash buckets is used for description. If a data size of an ID set of a computing participant is less than n records, a random number may be generated for supplementing.

In this embodiment of this application, for the ID elements in the hash buckets, with the same number, of the first computing participant and the second computing participant, whether there is an intersection between an ID element of the first computing participant in a hash bucket with the number and an ID element of the second computing participant in a hash bucket with the number is determined.

For ease of description, a hash bucket numbered 1 (a hash bucket 1) is used below as an example. Whether there is an intersection between an ID element of the first computing participant in the hash bucket 1 and an ID element of the second computing participant in the hash bucket 1 is determined. An execution process for a hash bucket with another number is the same as the execution process for the hash bucket 1, and details are not described herein again.

In an example, the first computing participant and the second computing participant may separately obtain a secret sharing value (<y>) of y. y indicates that an ID element of the first computing participant in the hash bucket 1 is an intersection ID, to be specific, whether one of ID elements of the second computing participant in the hash bucket 1 is equal to the ID element of the first computing participant in the hash bucket 1. For example, y being 1 may indicate that there is an intersection between the ID element of the first computing participant in the hash bucket 1 and the ID elements of the second computing participant in the hash bucket 1, and the ID element of the first computing participant in the hash bucket 1 is an intersection ID. y being 0 may indicate that there is no intersection between the ID element of the first computing participant in the hash bucket 1 and the ID elements of the second computing participant in the hash bucket 1, and the ID element of the first computing participant in the hash bucket 1 is not an intersection ID.

It should be understood that the secret sharing value of y may be a share or a slice of y, all computing participants each hold a share of y, and y may be obtained by combining shares of y that are respectively held by the computing participants.

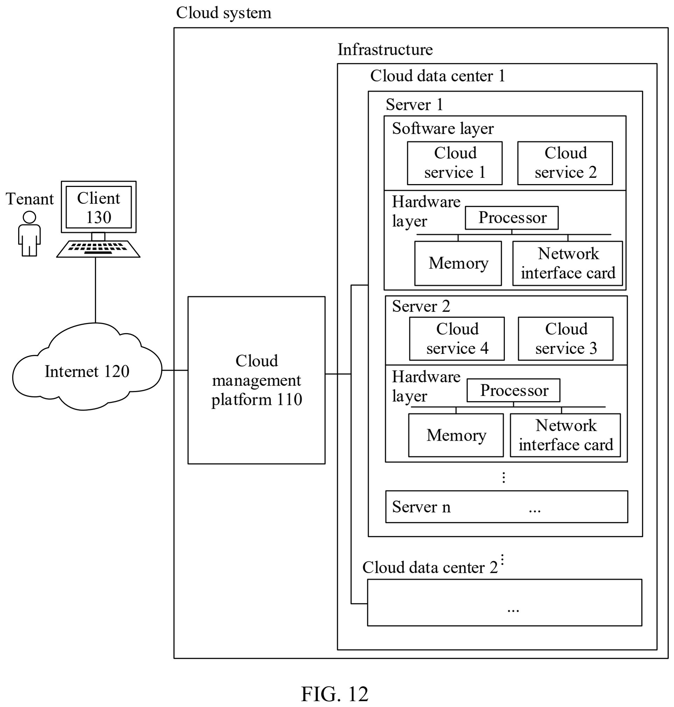

In a possible implementation, the first computing participant and the second computing participant may separately obtain the secret sharing value (<y>) of y through an OPPRF protocol. In an example, the first computing participant and the second computing participant may separately obtain the secret sharing value (<y>) of y through the OPPRF protocol based on forwarding of a cloud server. For example, FIG. 12 is a block diagram of a cloud scenario, and the cloud server is a server of a cloud data center shown in FIG. 12.

The cloud scenario in FIG. 12 may include a cloud management platform 110, the Internet 120, and a client 130. The cloud management platform 110 is configured to manage infrastructure that provides a plurality of cloud services. The infrastructure includes a plurality of cloud data centers. Each cloud data center includes a plurality of servers. Each server includes a cloud service resource, to provide a corresponding cloud service for a tenant. The cloud management platform 110 may be located in the cloud data center, and may provide an access interface (for example, an interface or an application programming interface (application programming interface, API)). The tenant may operate the client 130 to remotely access the access interface, to register a cloud account and a password on the cloud management platform 110 and log in to the cloud management platform 110. After the cloud management platform 110 successfully authenticates the cloud account and the password, the tenant may further pay on the cloud management platform 110 to select and purchase a virtual machine with specific specifications (a processor, a memory, and a disk). After the payment for the purchase succeeds, the cloud management platform 110 provides a remote login account and password of the purchased virtual machine, and the client 130 may remotely log in to the virtual machine, and install and run an application of the tenant in the virtual machine. Therefore, the tenant may create, manage, log in to, and operate the virtual machine in the cloud data center through the cloud management platform 110. The virtual machine may also be referred to as a cloud server (elastic compute service, ECS) or an elastic instance (different cloud service providers have different names).

It should be understood that a tenant of a cloud service may be an individual, an enterprise, a school, a hospital, an administrative agency, or the like.

Functions of the cloud management platform 110 include but are not limited to a user console, a computing management service, a network management service, a storage management service, an authentication service, and an image management service. The user console provides an interface or an API to interact with the tenant. The computing management service is used to manage servers on which a virtual machine and a container are run, and a bare metal server. The network management service is used to manage a network service (for example, a gateway or a firewall). The storage management service is used to manage a storage service (for example, a data bucket service). The authentication service is used to manage a tenant account and password. The image management service is used to manage a virtual machine image. The tenant may use the client 130 to log in to the cloud management platform 110 through the Internet 120 to manage a rented cloud service.

The following describes in detail a specific implementation of obtaining the secret sharing value (<y>) of y by the first computing participant and the second computing participant separately through the OPPRF protocol.

For example, it is assumed that the ID element of the first computing participant in the hash bucket 1 is x0, and the ID elements of the second computing participant in the hash bucket 1 are x1, x2, ..., and xm. The first computing participant inputs x0 in the hash bucket 1 to the OPPRF as input information, and the second computing participant inputs a plurality of pairs of (xi, yi) in the hash bucket 1 to the OPPRF as input information, where yi corresponding to xi in a same bucket is set to a same random number y*, that is, y1=y2=...ym=y*. The second computing participant uses y* set by the second computing participant as a secret sharing value <y>, held by the second computing participant, of y. If x0 is an intersection element, to be specific, xi among x1, x2, ..., and xm of the second computing participant in the hash bucket 1 is equal to x0, a secret sharing value <y>, output by the OPPRF to the first computing participant, of y is a secret sharing value of 1. If x0 is not an intersection element, to be specific, no xi among x1, x2, ..., and xm of the second computing participant in the hash bucket 1 is equal to x0, a secret sharing value <y>, output by the OPPRF to the first computing participant, of y is a secret sharing value of 0.

y may be obtained by combining secret sharing values <y> of y that are respectively held by the first computing participant and the second computing participant, where a value of y is either 0 or 1.

In some embodiments, it is assumed a secure multi-party computing scenario includes three or more computing participants, for example, a first computing participant, a second computing participant, a third computing participant, and a fourth computing participant. The first computing participant and the second computing participant perform a process shown in FIG. 4, so that the first computing participant obtains a secret sharing value <y01> of y01. Similarly, the first computing participant and the third computing participant perform the process shown in FIG. 4, so that the first computing participant obtains a secret sharing value <y02> of y02; and the first computing participant and the fourth computing participant perform the process shown in FIG. 4, so that the first computing participant obtains a secret sharing value <y03> of y03. The first computing participant may perform exclusive OR on the obtained <y01>, <y02>, and <y02>, and use an exclusive OR result as a secret sharing value <y>, held by the first computing participant, of y.

Step 220: Perform threshold-based determining on a quantity of IDs in the intersection ID.

In this embodiment of this application, after an intersection of IDs is obtained in step 220, each computing participant obtains a secret sharing value <y> of y, where y indicates whether x in the first computing participant is an intersection element. If y is 1, x is an intersection element; or if y is 0, x is not an intersection element.

In step 220, it is assumed that there are n hash buckets. The first computing participant adds up obtained n secret sharing values <y> of y that correspond to the n hash buckets, where a result of the addition is the quantity of IDs in the intersection ID; and performs threshold-based determining on the result of the addition. If the result of the addition is greater than a preset threshold, step 230 may be performed; or if the result of the addition is less than a preset threshold, the process ends.

In this embodiment of this application, threshold-based determining may be provided. If an intersection includes a quite small quantity of elements, a subsequent operation is terminated. This avoids a case that a trained model has unsatisfactory effect due to insufficient data, causing a waste of training costs.

Step 230: The first computing participant and the second computing participant separately obtain a secret sharing value <fs> of a feature value (feature) corresponding to an ID in an intersection.

For ease of description, one bucket, for example, a hash bucket numbered 1 (a hash bucket 1) is used below as an example for description.

In this embodiment of this application, for the first computing participant, the hash bucket 1 includes only one ID element: x0. Therefore, the first computing participant directly and secretly shares, to the second computing participant, a feature value corresponding to x0. That is, the first computing participant and the second computing participant separately hold the secret sharing value <fs> of the feature value (feature) corresponding to x0.

In this embodiment of this application, for the second computing participant, the hash bucket 1 includes a plurality of ID elements: (x1, x2, ..., xm). After an intersection of IDs is obtained, the second computing participant still does not know whether the hash bucket 1 includes an intersection ID, and does not know which ID element is an intersection ID either. Therefore, the second computing participant is not sure of an ID element whose feature value should be shared.

In an example, as shown in FIG. 5, the second computing participant and the first computing participant execute an OPPRF, the first computing participant inputs x0 in the hash bucket 1 to the OPPRF as input information, and the second computing participant inputs a plurality of pairs of (xi, yi) in the hash bucket 1 to the OPPRF as input information. yi corresponding to xi in a same bucket is set to feature-r, where the feature is a feature value corresponding to xi, and r values of different elements in a same bucket are the same. If x0 is an intersection element, to be specific, xi among x1, x2, ..., and xm of the second computing participant in the hash bucket 1 is equal to x0, <fs> output by the OPPRF to the first computing participant is as follows: f10=fi-r, where fi is a feature value corresponding to xi (xi=x0). The second computing participant holds r. If x0 is not an intersection element, to be specific, no xi among x1, x2, ..., and xm of the second computing participant in the hash bucket 1 is equal to x0, <fs> output by the OPPRF to the first computing participant is a meaningless random number.

In some embodiments, it is assumed a secure multi-party computing scenario includes three or more computing participants, for example, a first computing participant, a second computing participant, a third computing participant, and a fourth computing participant. The first computing participant may further obtain f20 and f30 through the foregoing processes, where f20 is <fs> shared by the third computing participant to the first computing participant, and f30 is <fs> shared by the fourth computing participant to the first computing participant. The first computing participant may further share f10, f20, and f30 obtained by the first computing participant to a computing participant without the share, and secretly share, to each computing participant without the share, a feature value corresponding to x0 of the first computing participant.

Specifically, the first computing participant secretly shares, to the third computing participant and the fourth computing participant, the feature value corresponding to x0, then shares f10 to the third computing participant and the fourth computing participant, then shares f20 to the second computing participant and the fourth computing participant, and then shares f30 to the second computing participant and the third computing participant.

Step 240: Perform data filtering on a plurality of pieces of <fs> based on a plurality of obtained values of y, to obtain training data used for model training.

In this embodiment of this application, n hash buckets are used as an example, and all computing participants may obtain, through the foregoing steps, n pieces of <y> and n pieces of <fs> respectively corresponding to the n pieces of <y>. Restoration is performed on the n pieces of <y> to obtain n pieces of y, and the n pieces of <fs> are filtered based on a value of y. In an example, y with a value of 1 indicates that x of the first computing participant in a hash bucket is an intersection element, and <fs> corresponding to y is a secret value including a feature value corresponding to x of each participant; and y with a value of 0 indicates that x of the first computing participant in a hash bucket is not an intersection element, and <fs> corresponding to y is a meaningless random number. Therefore, <fs> corresponding to y with a value of 1 may be retained, <fs> corresponding to y with a value of 0 is deleted, and the retained <fs> is used as training data for subsequent model training.

In the foregoing descriptions, through data selection, only secret sharing data in an intersection is used for subsequent model training, to avoid extra overheads.

Optionally, in some embodiments, before step 240, the obtained n pieces of <y> may alternatively be disordered. For example, the obtained n pieces of <y> may be disordered through secure multi-party shuffling (secure shuffle).

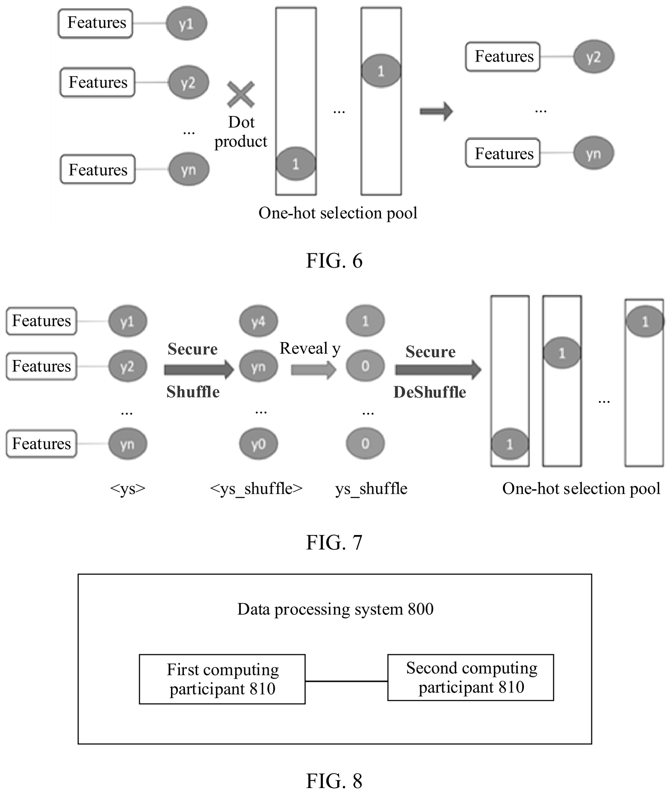

For example, as shown in FIG. 6, there are two steps. A first step is to generate a selection pool, and a second step is to obtain training data. The selection pool in the first step is a secret sharing value with a plurality of one-hot vectors. The one-hot vector is 1 at a subscript position corresponding to an intersection ID of the first computing participant, and is 0 at another position. Therefore, a quantity of one-hot vectors is the same as a quantity of intersection IDs, and each one-hot vector represents selection of a piece of combined data. In the second step of obtaining the training data, a secure multi-party dot product operation is performed by using the one-hot vector and the combined data. A corresponding quantity of one-hot vectors are randomly selected from the selection pool based on a quantity of pieces of training data that needs to be selected.

Specifically, as shown in FIG. 7, first, a list of y obtained by calculation an intersection of IDs is considered as a vector, and is denoted as <ys>. <ys> undergoes secure multi-party disordering to obtain <ys_shuffle>. To be specific, none of participants knows a mapping relationship between an order before the disordering and an order after the disordering. Then the disordered vector <ys_shuffle> is restored to plaintext. A plaintext one-hot vector pool is generated based on a position of 1. However, a position of 1 of a one-hot vector in the one-hot vector pool is not a real position of an intersection element, but is a position obtained after the disordering. Therefore, a secret sharing value of a real one-hot vector of the intersection is finally obtained through secure multi-party disorder restoration.

In this embodiment of this application, a function requirement and a privacy requirement that are needed in a data preprocessing stage of vertical secure multi-party learning are met, and a related cryptographic protocol is designed to fulfill the function requirement and the privacy requirement that are needed in the data preprocessing stage.

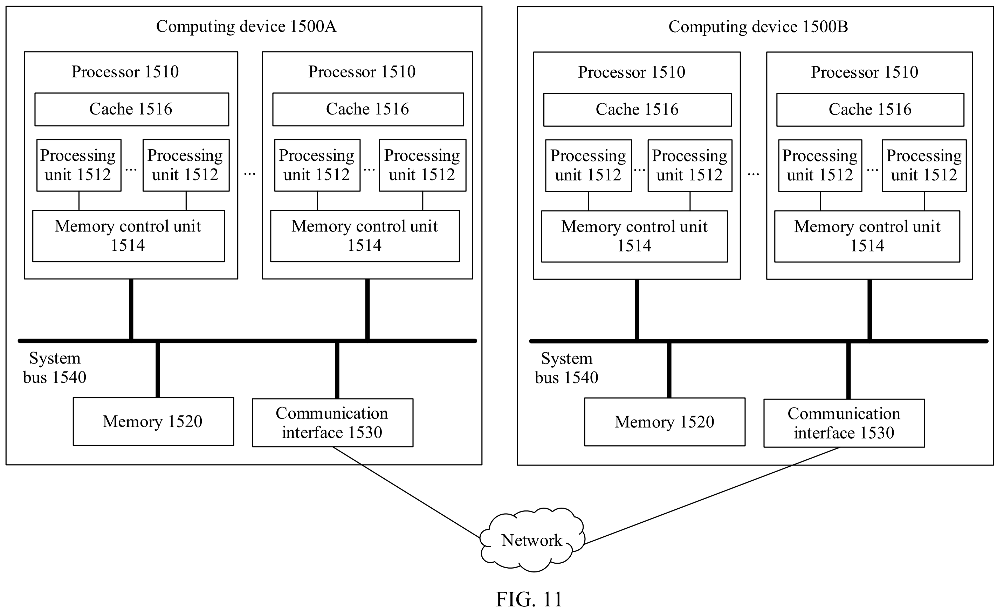

The foregoing describes in detail the method provided in embodiments of this application with reference to FIG. 1 to FIG. 7. The following describes in detail system embodiments of this application with reference to FIG. 8 to FIG. 11. It should be understood that the descriptions of the method embodiments correspond to descriptions of the system embodiments. Therefore, for a part that is not described in detail, refer to the foregoing method embodiments.

FIG. 8 is a block diagram of a data processing system 800 according to an embodiment of this application. The system 800 may be implemented by using software, hardware, or a combination of software and hardware. The system 800 provided in this embodiment of this application may implement the method process shown in embodiments of this application. The system 800 includes a first computing participant 810 and a second computing participant 820. The first computing participant 810 and the second computing participant 820 are separately configured to obtain first ciphertext data, where the first ciphertext data indicates whether a first ID of the first computing participant 810 is an intersection ID, and the intersection ID indicates that the first ID is the same as any one of at least one ID of the second computing participant 820. The second computing participant 820 is further configured to obtain, from the first computing participant 810, a share of a first feature value corresponding to the first ID, where the share of the first feature value is obtained by the first computing participant by sharing the first feature value between the first computing participant 810 and the second computing participant 820 in a secret sharing mode, and the first feature value is restorable based on a share of the first feature value that is obtained by each of the first computing participant 810 and the second computing participant 820. The first computing participant 810 is further configured to obtain second data, where if the first ID is an intersection ID, the second data is a share of a second feature value that is in the second computing participant 820 and that corresponds to the first ID, or if the first ID is not an intersection ID, the second data is a random number; the share of the second feature value is obtained by the second computing participant 820 by sharing the second feature value between the first computing participant 810 and the second computing participant 820 in a secret sharing mode; and the second feature value is restorable based on a share of the second feature value that is obtained by each of the first computing participant 810 and the second computing participant 820. If the first ciphertext data indicates that the first ID is an intersection ID, the first computing participant 810 is further configured to use the second data and a share of the first feature value that is held by the first computing participant 810 as training data of a neural network. If the first ciphertext data indicates that the first ID is an intersection ID, the second computing participant 820 is further configured to use a share of the first feature value and a share of the second feature value that are held by the second computing participant 820 as training data of the neural network.

Optionally, the first computing participant 810 and the second computing participant 820 are further separately configured to perform restoration on the first ciphertext data to obtain first data; and the first computing participant 810 and the second computing participant 820 are further separately configured to determine, based on the first data, whether the first ID is the intersection ID.

Optionally, if the first computing participant 810 indicates, based on the first ciphertext data obtained by the first computing participant 810, that the first ID is not an intersection ID, the first computing participant 810 is further configured to delete the second data and the share of the first feature value that is held by the first computing participant 810; and if the second computing participant 820 indicates, based on the first ciphertext data obtained by the second computing participant 820, that the first ID is not an intersection ID, the second computing participant 820 is further configured to delete the share of the first feature value and the share of the second feature value that are held by the second computing participant 820.

Optionally, the first computing participant 810 and the second computing participant 820 are further configured to determine, based on a plurality of pieces of ciphertext data corresponding to a plurality of hash buckets, whether a quantity of intersection IDs is greater than a preset threshold, where the plurality of pieces of ciphertext data include the first ciphertext data. The second computing participant 820 is specifically configured to: when the quantity of intersection IDs is greater than the preset threshold, obtain, from the first computing participant, the share of the first feature value corresponding to the first ID. The first computing participant 810 is specifically configured to: when the quantity of intersection IDs is greater than the preset threshold, obtain the second data.

Optionally, the first computing participant 810 and the second computing participant 820 are further configured to separately randomly disorder a plurality of pieces of ciphertext data obtained by each of the first computing participant 810 and the second computing participant 820.

Optionally, the first computing participant 810 and the second computing participant 820 are specifically configured to separately obtain the first ciphertext data through an oblivious programmable pseudorandom function OPPRF or key exchange DH.

Optionally, the first computing participant 810 is specifically configured to obtain the second data through an oblivious programmable pseudorandom function OPPRF.

The system 800 herein may be embodied in a form of a functional module. The term "module" herein may be implemented in a form of software and/or hardware. This is not specifically limited.

For example, the "first computing participant" may be a software program, a hardware circuit, or a combination thereof for implementing the foregoing functions. For example, the following uses the first computing participant as an example and describes an implementation of the first computing participant. Similarly, for an implementation of another module, for example, the second computing participant, refer to the implementation of the first computing participant.

For example, the first computing participant is a software functional unit, and the first computing participant may include code that is run on a computing instance. The computing instance may include at least one of a physical host (a computing device), a virtual machine, or a container. Further, there may be one or more computing instances. For example, the first computing participant may include code that is run on a plurality of hosts, virtual machines, or containers. It should be noted that the plurality of hosts, virtual machines, or containers for running the code may be distributed in a same region (region) or different regions. Further, the plurality of hosts, virtual machines, or containers for running the code may be distributed in a same availability zone (availability zone, AZ) or different AZs. Each AZ includes one data center or a plurality of data centers that are geographically close to each other. Usually, one region may include a plurality of AZs.

Similarly, the plurality of hosts, virtual machines, or containers for running the code may be distributed in a same virtual private cloud (virtual private cloud, VPC) or a plurality of VPCs. Usually, one VPC is deployed in one region. A communication gateway needs to be deployed in each VPC for communication between two VPCs in a same region or between VPCs in different regions. The VPCs are interconnected through the communication gateway.

For example, the first computing participant is a hardware functional unit, and the first computing participant may include at least one computing device, for example, a server. Alternatively, the first computing participant may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field programmable gate array, FPGA), a generic array logic (generic array logic, GAL), or any combination thereof.

A plurality of computing devices included in the first computing participant may be distributed in a same region or different regions. The plurality of computing devices included in the first computing participant may be distributed in a same AZ or different AZs. Similarly, the plurality of computing devices included in the first computing participant may be distributed in a same VPC or a plurality of VPCs. The plurality of computing devices may be any combination of the following computing devices: a server, an ASIC, a PLD, a CPLD, an FPGA, a GAL, and the like.

Therefore, the modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

In addition, the system embodiments and the method embodiments provided in the foregoing embodiments belong to a same concept. For details about specific implementation processes of the system embodiments, refer to the foregoing method embodiments. Details are not described herein again.

The method provided in embodiments of this application may be performed by a computing device, and the computing device may also be referred to as a computer system. The computer system includes a hardware layer, an operating system layer running above the hardware layer, and an application layer running above the operating system layer. The hardware layer includes hardware such as a processing unit, a memory, and a memory control unit. A function and a structure of the hardware are subsequently described in detail. An operating system is any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, optionally, the computer system is a handheld device such as a smartphone, or a terminal device such as a personal computer. This is not particularly limited in this application, provided that the method provided in embodiments of this application can be implemented. The method provided in embodiments of this application may be performed by the computing device or a functional module that is in the computing device and that can invoke a program and execute the program.

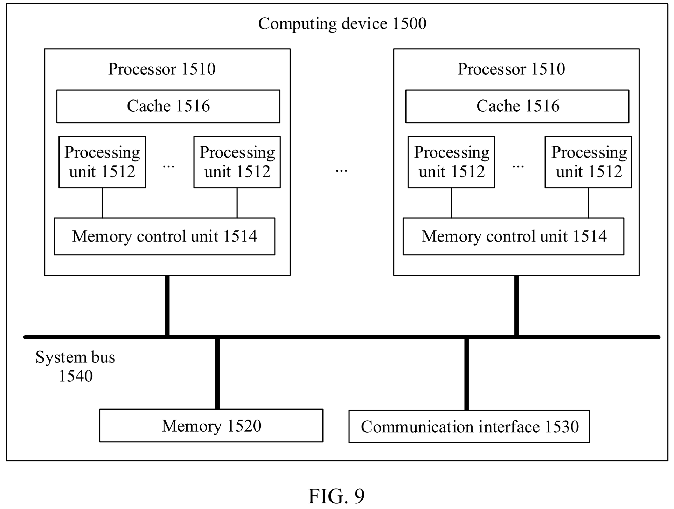

The following describes in detail a computing device provided in embodiments of this application with reference to FIG. 9.

FIG. 9 is a diagram of an architecture of a computing device 1500 according to an embodiment of this application. The computing device 1500 may be a server, a computer, or another device with a computing capability. The computing device 1500 shown in FIG. 9 includes at least one processor 1510 and a memory 1520.

It should be understood that quantities of processors and memories in the computing device 1500 are not limited in this application.

The processor 1510 executes instructions in the memory 1520 to enable the computing device 1500 to implement the method provided in this application. Alternatively, the processor 1510 executes instructions in the memory 1520 to enable the computing device 1500 to implement the functional modules provided in this application, to implement the method provided in this application.

Optionally, the computing device 1500 further includes a communication interface 1530. The communication interface 1530 implements communication between the computing device 1500 and another device or a communication network through a transceiver module, for example, but not limited to, a network interface card or a transceiver.

Optionally, the computing device 1500 further includes a system bus 1540. The processor 1510, the memory 1520, and the communication interface 1530 are separately connected to the system bus 1540. The processor 1510 can access the memory 1520 through the system bus 1540. For example, the processor 1510 can read and write data or execute code in the memory 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, and the like. For ease of representation, only one bold line is used in FIG. 9 for representation, but this does not mean that there is only one bus or only one type of bus.

In a possible implementation, a function of the processor 1510 is mainly to interpret instructions (or code) of a computer program and process data in computer software. The instructions of the computer program and the data in the computer software can be stored in the memory 1520 or a cache 1516.

Optionally, the processor 1510 may be an integrated circuit chip and has a signal processing capability. As an example rather than a limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is the most important component of the processor. The processing unit 1512 is made of monocrystalline silicon through a specific production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1514 is configured to control data exchange between the memory 1520 and the processing unit 1512. Specifically, the memory control unit 1514 receives a memory access request from the processing unit 1512, and controls access to the memory based on the memory access request. As an example rather than a limitation, the memory control unit is a component such as a memory management unit (memory management unit, MMU).

In an implementation example, each memory control unit 1514 performs addressing for the memory 1520 through the system bus. In addition, an arbiter (not shown in FIG. 9) is configured in the system bus, and the arbiter is responsible for processing and coordinating contention-based access of a plurality of processing units 1512.

In an implementation example, the processing unit 1512 and the memory control unit 1514 are communicatively connected through a connection line such as an address line in a chip, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for the needed data. If the data is found, the processing unit 1512 directly reads the data. If the data is not found, the processing unit 1512 searches the memory for the data. Because the cache runs much faster than the memory, a function of the cache is to help the processing unit 1512 run faster.

The memory 1520 can provide running space for a process on the computing device 1500. For example, the memory 1520 stores a computer program (specifically, program code) for generating the process. After the computer program is run by the processor to generate the process, the processor allocates corresponding storage space to the process in the memory 1520. Further, the storage space includes a text segment, an initialized data segment, an uninitialized data segment, a stack segment, a heap segment, and the like. The memory 1520 stores, in the storage space corresponding to the process, data generated during running of the process, for example, intermediate data or process data.

Optionally, the memory is also referred to as an internal memory, and a function of the memory is to temporarily store operation data in the processor 1510 and data exchanged with an external memory, for example, a hard disk drive. Provided that the computer runs, the processor 1510 schedules, to the memory for an operation, data on which the operation needs to be performed, and the processing unit 1512 sends a result after the operation is completed.

As an example rather than a limitation, the memory 1520 is a volatile memory a non-volatile memory, or may include both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM) and serves as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory 1520 in the systems and the methods described in this specification is intended to include but is not limited to these memories and any other appropriate type of memory.

The foregoing structure of the computing device 1500 is merely an example for description, and this application is not limited thereto. The computing device 1500 in this embodiment of this application includes various types of hardware in a computer system in the conventional technology. For example, the computing device 1500 further includes a memory other than the memory 1520, for example, a magnetic disk memory. A person skilled in the art should understand that the computing device 1500 may further include another component required for implementing normal running. In addition, a person skilled in the art should understand that, according to a specific requirement, the computing device 1500 may further include a hardware component for implementing another additional function. In addition, a person skilled in the art should understand that the computing device 1500 may alternatively include only a component required for implementing embodiments of this application, and does not need to include all of the components shown in FIG. 9.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

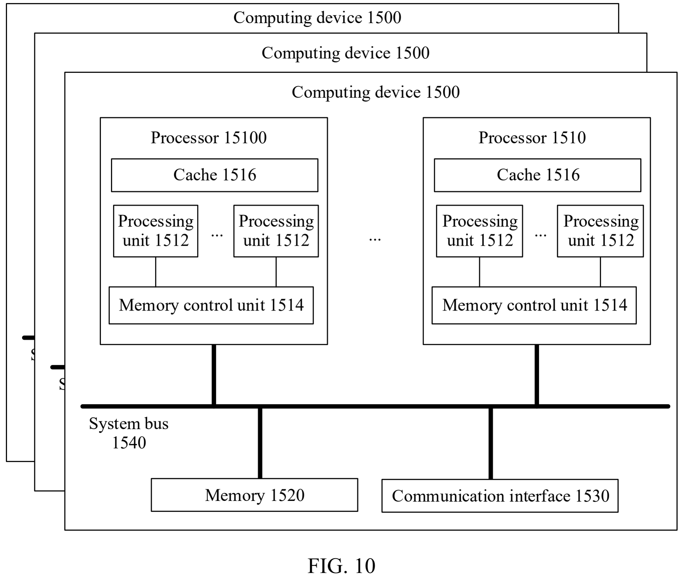

As shown in FIG. 10, the computing device cluster includes at least one computing device 1500. A memory 1520 in one or more computing devices 1500 in the computing device cluster may store same instructions for performing the foregoing method.

In some possible implementations, a memory 1520 in one or more computing devices 1500 in the computing device cluster may alternatively respectively store some of instructions for performing the foregoing method. In other words, a combination of one or more computing devices 1500 may jointly execute instructions for the foregoing method.

It should be noted that memories 1520 in different computing devices 1500 in the computing device cluster may store different instructions that are respectively used to perform some of functions of the foregoing computing participant. In other words, instructions stored in memories 1520 in different computing devices 1500 may implement one or more functions of the foregoing computing participant.

In some possible implementations, one or more computing devices in the computing device cluster may be connected through a network. The network may be a wide area network, a local area network, or the like. FIG. 10 shows a possible implementation. As shown in FIG. 10, two computing devices 1500A and 1500B are connected through a network. Specifically, each computing device is connected to the network through a communication interface of the computing device.

It should be understood that functions of the computing device 1500A shown in FIG. 10 may alternatively be performed by a plurality of computing devices 1500. Similarly, functions of the computing device 1500B may alternatively be performed by a plurality of computing devices 1500.

An embodiment further provides a computer program product including instructions. The computer program product may be software or a program product that includes instructions and that can be run on a computing device or stored in any usable medium. When the computer program product is run on a computing device, the computing device is enabled to perform the method provided above, or the computing device is enabled to implement the functions of the system provided above.

An embodiment further provides a computer-readable storage medium. The computer-readable storage medium may be any usable medium that can be stored on a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed on a computing device, the computing device is enabled to perform the method provided above.

It should be understood that sequence numbers of the foregoing processes do not mean execution sequences in embodiments of this application. The execution sequences of the processes should be determined based on functions and internal logic of the processes, and should not be construed as any limitation on implementation processes of embodiments of this application.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems and units, reference may be made to corresponding processes in the foregoing method embodiments. Details are not described herein again.

In several embodiments provided in this application, it should be understood that the disclosed systems and methods may be implemented in other manners. For example, the described system embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:
separately obtaining, by a first computing participant and a second computing participant, first ciphertext data, wherein the first ciphertext data indicates whether a first ID of the first computing participant is an intersection ID, and the intersection ID indicates that the first ID is the same as any one of at least one ID of the second computing participant;
obtaining, by the second computing participant from the first computing participant, a share of a first feature value corresponding to the first ID, wherein the share of the first feature value is obtained by the first computing participant by sharing the first feature value between the first computing participant and the second computing participant in a secret sharing mode, and the first feature value is restorable based on a share of the first feature value that is obtained by each of the first computing participant and the second computing participant;
obtaining, by the first computing participant, second data, wherein if the first ID is an intersection ID, the second data is a share of a second feature value that is in the second computing participant and that corresponds to the first ID, or if the first ID is not an intersection ID, the second data is a random number; the share of the second feature value is obtained by the second computing participant by sharing the second feature value between the first computing participant and the second computing participant in a secret sharing mode; and the second feature value is restorable based on a share of the second feature value that is obtained by each of the first computing participant and the second computing participant;
if the first ciphertext data indicates that the first ID is an intersection ID, using, by the first computing participant, the second data and a share of the first feature value that is held by the first computing participant as training data of a neural network; and
if the first ciphertext data indicates that the first ID is an intersection ID, using, by the second computing participant, a share of the first feature value and a share of the second feature value that are held by the second computing participant as training data of the neural network.

2. The method according to claim 1, wherein the method further comprises:
separately performing, by the first computing participant and the second computing participant, restoration on the first ciphertext data to obtain first data; and
determining, based on the first data, whether the first ID is the intersection ID.

3. The method according to claim 1 or 2, wherein the method further comprises:
if the first computing participant indicates, based on the first ciphertext data obtained by the first computing participant, that the first ID is not an intersection ID, deleting, by the first computing participant, the second data and the share of the first feature value that is held by the first computing participant; and
if the second computing participant indicates, based on the first ciphertext data obtained by the second computing participant, that the first ID is not an intersection ID, deleting, by the second computing participant, the share of the first feature value and the share of the second feature value that are held by the second computing participant.

4. The method according to any one of claims 1 to 3, wherein the method further comprises:
determining, by the first computing participant and the second computing participant based on a plurality of pieces of ciphertext data corresponding to a plurality of hash buckets, whether a quantity of intersection IDs is greater than a preset threshold, wherein the plurality of pieces of ciphertext data comprise the first ciphertext data;
obtaining, by the second computing participant from the first computing participant, the share of the first feature value corresponding to the first ID comprises:
when the quantity of intersection IDs is greater than the preset threshold, obtaining, by the second computing participant from the first computing participant, the share of the first feature value corresponding to the first ID; and
obtaining, by the first computing participant, the second data comprises:
when the quantity of intersection IDs is greater than the preset threshold, obtaining, by the first computing participant, the second data.

5. The method according to claim 4, wherein the method further comprises:
separately randomly disordering, by the first computing participant and the second computing participant, a plurality of pieces of ciphertext data obtained by each of the first computing participant and the second computing participant.

6. The method according to any one of claims 1 to 5, wherein separately obtaining, by the first computing participant and the second computing participant, the first ciphertext data comprises:
separately obtaining, by the first computing participant and the second computing participant, the first ciphertext data through an oblivious programmable pseudorandom function OPPRF or key exchange DH.

7. The method according to any one of claims 1 to 6, wherein obtaining, by the first computing participant, the second data comprises:
obtaining, by the first computing participant, the second data through an oblivious programmable pseudorandom function OPPRF.

8. The method according to any one of claims 1 to 7, wherein the first ID of the first computing participant is an ID of the first computing participant in a first hash bucket, the at least one ID of the second computing participant is at least one ID of the second computing participant in the first hash bucket, the first ciphertext data is ciphertext data corresponding to the first hash bucket, and the second data is second data corresponding to the first hash bucket.

9. A data processing system, wherein the system comprises:
a first computing participant and a second computing participant, separately configured to obtain first ciphertext data, wherein the first ciphertext data indicates whether a first ID of the first computing participant is an intersection ID, and the intersection ID indicates that the first ID is the same as any one of at least one ID of the second computing participant, wherein
the second computing participant is further configured to obtain, from the first computing participant, a share of a first feature value corresponding to the first ID, wherein the share of the first feature value is obtained by the first computing participant by sharing the first feature value between the first computing participant and the second computing participant in a secret sharing mode, and the first feature value is restorable based on a share of the first feature value that is obtained by each of the first computing participant and the second computing participant;
the first computing participant is further configured to obtain second data, wherein if the first ID is an intersection ID, the second data is a share of a second feature value that is in the second computing participant and that corresponds to the first ID, or if the first ID is not an intersection ID, the second data is a random number; the share of the second feature value is obtained by the second computing participant by sharing the second feature value between the first computing participant and the second computing participant in a secret sharing mode; and the second feature value is restorable based on a share of the second feature value that is obtained by each of the first computing participant and the second computing participant;
if the first ciphertext data indicates that the first ID is an intersection ID, the first computing participant is further configured to use the second data and a share of the first feature value that is held by the first computing participant as training data of a neural network; and
if the first ciphertext data indicates that the first ID is an intersection ID, the second computing participant is further configured to use a share of the first feature value and a share of the second feature value that are held by the second computing participant as training data of the neural network.

10. The system according to claim 9, wherein
the first computing participant and the second computing participant are further separately configured to perform restoration on the first ciphertext data to obtain first data; and
the first computing participant and the second computing participant are further separately configured to determine, based on the first data, whether the first ID is the intersection ID.

11. The system according to claim 9 or 10, wherein if the first computing participant indicates, based on the first ciphertext data obtained by the first computing participant, that the first ID is not an intersection ID, the first computing participant is further configured to delete the second data and the share of the first feature value that is held by the first computing participant; and
if the second computing participant indicates, based on the first ciphertext data obtained by the second computing participant, that the first ID is not an intersection ID, the second computing participant is further configured to delete the share of the first feature value and the share of the second feature value that are held by the second computing participant.

12. The system according to any one of claims 9 to 11, wherein
the first computing participant and the second computing participant are further configured to determine, based on a plurality of pieces of ciphertext data, whether a quantity of intersection IDs is greater than a preset threshold, wherein the plurality of pieces of ciphertext data comprise the first ciphertext data;
the second computing participant is specifically configured to: when the quantity of intersection IDs is greater than the preset threshold, obtain, from the first computing participant, the share of the first feature value corresponding to the first ID; and
the first computing participant is specifically configured to: when the quantity of intersection IDs is greater than the preset threshold, obtain the second data.

13. The system according to claim 12, wherein
the first computing participant and the second computing participant are further configured to separately randomly disorder a plurality of pieces of ciphertext data obtained by each of the first computing participant and the second computing participant.

14. The system according to any one of claims 9 to 13, wherein
the first computing participant and the second computing participant are specifically configured to separately obtain the first ciphertext data through an oblivious programmable pseudorandom function OPPRF or key exchange DH.

15. The system according to any one of claims 9 to 14, wherein the first computing participant is specifically configured to:
obtain the second data through an oblivious programmable pseudorandom function OPPRF.

16. The system according to any one of claims 9 to 15, wherein the first ID of the first computing participant is an ID of the first computing participant in a first hash bucket, the at least one ID of the second computing participant is at least one ID of the second computing participant in the first hash bucket, the first ciphertext data is ciphertext data corresponding to the first hash bucket, and the second data is second data corresponding to the first hash bucket.

17. A computing device cluster, comprising at least one computing device, wherein each computing device comprises a processor and a memory, wherein
a processor of the at least one computing device is configured to execute instructions stored in a memory of the at least one computing device, to enable the computing device cluster to perform the method according to any one of claims 1 to 8.

18. A computer program product comprising instructions, wherein when the instructions are run by a computing device cluster, the computing device cluster is enabled to perform the method according to any one of claims 1 to 8.

19. A computer-readable storage medium, comprising computer program instructions, wherein when the computer program instructions are executed by a computing device cluster, the computing device cluster performs the method according to any one of claims 1 to 8.
